# FASCICULE DE BREVET EUROPEEN

(11) **EP 0 970 866 B1**
(45) Date de publication et mention de la délivrance du brevet: **21.04.2004**
(21) Numéro de dépôt: 99420149.9
(22) Date de dépôt: 02.07.1999
(51) Int. Cl.: B61F 5/52, B61F 3/08

(54) **Bogie pour véhicule ferroviaire et son procédé de fabrication**
Drehgestell eines Schienenfahrzeugs und sein Herstellungsverfahren
Bogie of a railway vehicle and its method of manufacturing

(30) Priorité: 06.07.1998 FR 9808620
(43) Date de publication de la demande: 12.01.2000
(73) Titulaire: ALSTOM Holdings, 75116 Paris (FR)
(72) Inventeur: Landrot, Alain, 71200 Le Creusot (FR)
(74) Mandataire: Myon, Gérard Jean-Pierre

(56) Documents cités:
- EP-A- 0 050 727
- DE-C- 565 258
- US-A- 4 773 334

## Description

L'invention a trait à un bogie pour véhicule ferroviaire et à un procédé de fabrication d'un tel bogie.

Un bogie de véhicule ferroviaire est destiné à supporter un véhicule, telle qu'une caisse ou une motrice, en appui sur plusieurs roues réparties sur des essieux.

Compte tenu des masses des motrices et de leur vitesse de déplacement, les efforts dus aux accélérations de ces matériels, notamment lors des changements de direction, sont importants, de sorte qu'il est d'usage de réaliser des bogies sous forme de pièces massives en acier ou de structures mécano-soudées. Ces pièces massives et ces structures mécano-soudées ont une configuration fixée dès leur conception, de sorte qu'elle ne peuvent pas être adaptées, en cours de fabrication, aux conditions d'utilisation du bogie.

Or, l'empattement du bogie, la hauteur de la caisse, la largeur de voie et la charge à l'essieu sont autant de paramètres variables d'un bogie à l'autre qui devraient être pris en compte lors de sa conception. En pratique, on a tendance à surdimensionner les bogies pour leur permettre de résister aux efforts subis dans toutes les configurations, ce qui induit un sur-coût pour ces bogies et une rigidité accrue qui doit être compensée par des systèmes de suspension et d'amortissement adaptés pour assurer le confort des passagers ou l'absorption des vibrations dues aux irrégularités de la voies sur laquelle circule le matériel.

Par la demande de brevet européen 0 031 008, on connaît un bogie de véhicule ferroviaire comprenant des traverses en forme de H réalisées en matériau composite. Ces traverses ont une section et une longueur définies dès leur moulage, de sorte qu'elles ne peuvent pas être adaptées aux conditions d'utilisation de chaque bogie.

C'est à ces inconvénients qu'entend plus particulièrement remédier l'invention, en proposant un bogie qui peut être adapté à ses conditions d'utilisation et ce, y compris en cours de fabrication, voire au terme de sa fabrication.

Dans cet esprit, l'invention concerne un bogie pour véhicule ferroviaire, ce bogie étant en appui sur des roues réparties sur au moins deux essieux, au moins un longeron étant prévu pour relier ces essieux à un châssis, caractérisé en ce que ce châssis comporte au moins un logement, en forme de tube orienté dans le sens longitudinal du bogie et débouchant aux deux extrémités dudit châssis pour la réception du longeron.

Grâce à l'invention, le châssis d'une part et le ou les longerons d'autre part peuvent être fabriqués indépendamment les uns des autres, les longerons étant fabriqués avec des géométries différentes adaptées aux différentes conditions d'utilisation du bogie. En particulier, les longerons peuvent correspondre à des empattements différents du bogie, à une charge à l'essieu et à une hauteur de caisse variables. En cours de fabrication, il est alors possible de choisir un longeron, adapté aux conditions d'utilisation finales du bogie, pour le monter sur un châssis qui peut être commun aux différents types de longerons utilisés. Cette souplesse de fabrication due à la modularité du concept du bogie de l'invention permet d'adapter facilement les bogies à leurs conditions réelles d'utilisation. Cette souplesse permet également de remplacer les longerons d'un bogie au cours de sa durée de vie, ce qui permet d'adapter ses propriétés mécaniques à d'éventuelles nouvelles conditions d'utilisation du bogie.

Selon un premier aspect avantageux de l'invention, le logement est pourvu de moyens d'immobilisation du longeron par rapport au châssis. Ces moyens peuvent être formés de dispositifs boulonnés ou de mâchoires articulées revêtues d'élastomère et fixées à l'intérieur des logements.

Selon un autre aspect avantageux de l'invention, la section interne du logement est adaptée pour épouser la forme extérieure du longeron. Grâce à cet aspect de l'invention, la portée du longeron peut s'effectuer sur toute la longueur du logement, ce qui garantit une bonne répartition des efforts mécaniques entre le longeron et le châssis et donc une bonne stabilité du bogie ainsi formé. Il est également possible de prévoir que la portée du longeron sur le châssis s'effectue. grâce à des moyens d'articulation répartis sur la longueur du logement, permettant ainsi une grande souplesse du longeron.

Selon des variantes d'utilisation de l'invention, le châssis et le longeron peuvent être réalisés en matériau composite ou en acier.

Selon un autre aspect avantageux de l'invention, le châssis comprend deux poutres creuses s'étendant selon une direction globalement parallèle à la direction d'avance normale du véhicule, un logement de réception d'un longeron étant ménagé dans chaque poutre. Cet aspect de l'invention permet de conférer au châssis une géométrie simple, ce qui permet de contrôler efficacement le prix de revient d'un tel matériel. Le châssis est avantageusement de forme globalement parallélépipédique et pourvu d'un évidement central bordé par les poutres creuses et par deux traverses pourvues de moyens de fixation d'éléments fonctionnels du bogie. Dans ce cas, on peut prévoir que les traverses sont réalisées en matériau composite et que les moyens de fixation comprennent au moins un support rigide allongé immobilisé dans l'une de ces traverses, ce support étant apte à recevoir, de façon amovible, en plusieurs emplacements répartis sur sa longueur, des moyens de fixation d'éléments fonctionnels du bogie.

L'invention concerne également un procédé de fabrication d'un bogie tel que précédemment décrit et, plus spécifiquement, un procédé qui consiste à :
- réaliser un châssis pourvu d'au moins un logement orienté dans le sens longitudinal du bogie, pour la réception d'un longeron de support du châssis en appui sur deux essieux de roues ;
- choisir, parmi plusieurs longerons de géométries différentes, un longeron adapté à l'utilisation prévue du bogie ;
- insérer ce longeron dans le logement et
- immobiliser le longeron à l'intérieur du logement.

L'invention sera mieux comprise et d'autres avantages de celle-ci apparaîtront plus clairement à la lumière de la description qui va suivre d'un mode de réalisation d'un bogie du véhicule ferroviaire conforme à son principe et de son procédé de fabrication, donnée uniquement à titre d'exemple et faite en référence aux dessins annexés dans lesquels :
- la figure 1 est une vue de côté d'un bogie de véhicule ferroviaire conforme à l'invention ;

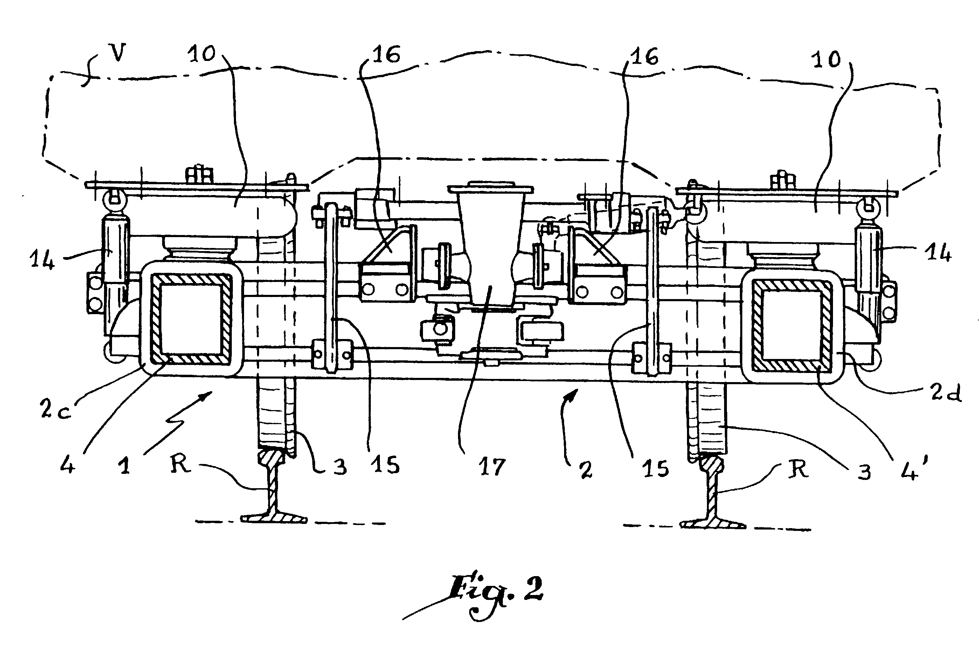

- la figure 2 est une coupe selon la ligne II-II à la figure 1 et
- la figure 3 est une représentation schématique de principe, en perspective éclatée, de certains éléments de structure du bogie des figures 1 et 2.

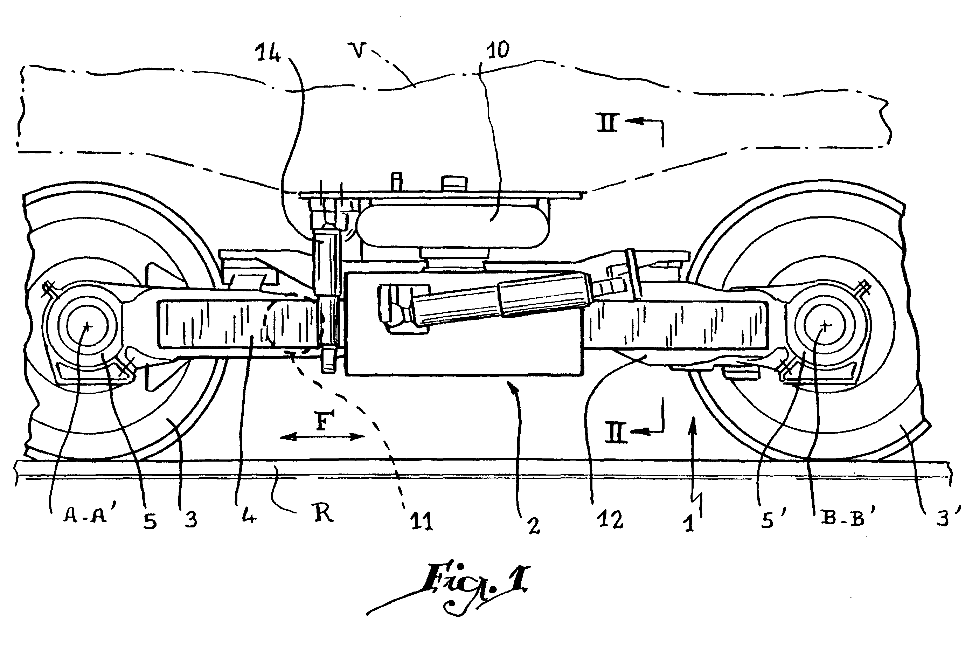

Le bogie 1 représenté à la figure 1 est destiné à supporter un véhicule ferroviaire V, représenté en traits mixtes, en appui sur des rails dont un seul est visible à la figure 1 avec la référence R. Ce bogie 1 est supporté par deux trains de roues 3 et 3' regroupées sur des essieux représentés par des axes A-A' et B-B' de rotation des roues. Des longerons 4 et 4' sont prévus pour supporter le châssis 2 en appui sur des boîtes à essieu 5 et 5' des roues 3 et 3'.

Le châssis 2 et les longerons 4 et 4' sont réalisés en matériau composite, de préférence à base de résine époxydique ou phénolique chargée en fibres de verre, de carbone d'aramide ou équivalent. Ainsi, le bogie est sensiblement plus léger que des bogies classiques en acier, alors qu'il présente d'excellentes propriétés mécaniques et que son prix de revient peut être relativement bas.

Des éléments de suspension secondaire 10 sont prévus pour être intercalés entre le châssis 2 et la caisse du véhicule V. Un moteur d'entraînement 11 et un système de freinage 12 sont également supportés par le châssis 2. Des amortisseurs 14 sont intercalés entre des parties en mouvement du bogie 1. Des bielles 15 sont articulées sur le châssis 2 alors que des butées 16 sont disposées autour d'un pivot d'entraînement 17 pour en limiter la course transversale. Les éléments 10 à 17 constituent des éléments fonctionnels du bogie 1.

En fonction du type de bogie, porteur ou moteur, des équipements spécifiques à ce type de bogie et des équipements optionnels du véhicule V, les éléments fonctionnels 10 à 17 ou équivalents peuvent être de taille et de forme variables, ce qui influe sur leur implantation par rapport au châssis 2.

Des rails 20 sont prévus pour être intégrés à la structure du châssis 2, plus précisément à l'intérieur de deux poutres 2a et 2b de ce châssis qui s'étendent globalement perpendiculairement à la direction d'avance du véhicule V sur les rails R, représentée par la flèche F à la figure 1.

Ces rails 20 ont une section transversale en forme de C et des coulisseaux 30 sont disposés dans le volume intérieur de chaque rail 20 de façon à pouvoir se déplacer en translation le long de ce rail. Chaque coulisseau 30 est pourvu d'un taraudage central destiné à recevoir une vis de fixation dont le serrage dans le taraudage correspondant permet d'immobiliser un support 33 pour l'un des éléments 10 à 17. Comme les coulisseaux peuvent être déplacés à l'intérieur des rails 20, les éléments 10 à 17 peuvent être reçus sur les rails 20 de façon amovible en plusieurs emplacements répartis sur sa longueur.

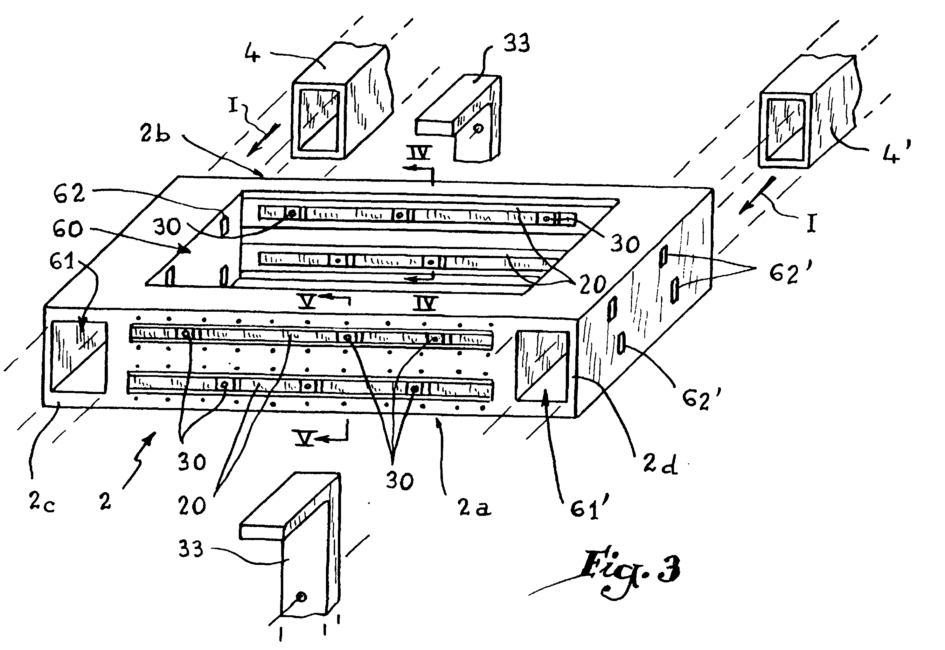

Comme il ressort de la figure 3, le châssis 2 est de forme globalement parallélépipédique et comprend un évidement central 60 dont les deux poutres 2a et 2b constituent deux bordures. Les deux autres bordures de l'évidement 60 sont constituées par deux poutres creuses 2c et 2d raccordées aux traverses 2a et 2b par la continuité du matériau composite formant le châssis 2.

Conformément à l'invention les volumes intérieurs respectifs 61 et 61' des poutres creuses 2c et 2d constituent des logements de réception des longerons 4 et 4'. Ces logements 61 et 61' peuvent être traversés de part en part par les longerons 4 et 4' pour relier les boîtes à essieu 5 et 5'.

Ainsi, la fabrication d'un bogie conforme à l'invention comprend une étape d'insertion des longerons 4 et 4' à l'intérieur des logements 61 et 61', comme représenté par les flèches I à la figure 3, ces longerons ayant été préalablement sélectionnés en fonction de l'utilisation du bogie et, notamment, de son empattement, de sa charge à l'essieu et de la hauteur de la caisse prévus. L'invention permet donc d'atteindre une modularité particulièrement avantageuse d'un bogie de véhicule ferroviaire dans la mesure où un unique type de châssis peut être utilisé avec des longerons différents, en fonction de l'utilisation finale du bogie.

La section intérieure des logements 61 et 61' est sensiblement équivalente à la section extérieure des longerons 4 et 4' de sorte que la coopération de formes de ces éléments contribue à une bonne immobilisation des longerons à l'intérieur des logements.

Compte tenu du caractère traversant des logements 61 et 61' et du fait que les longerons s'étendent de part et d'autre du châssis 2, c'est-à-dire en avant ou en arrière de celui-ci par rapport à la direction de déplacement F du véhicule sur les rails, la surface de portée du longeron 4 et 4' à l'intérieur des logements 61 et 61' est sensiblement égale à la longueur des poutres 2c et 2d, de sorte que le maintien des longerons par rapport au châssis peut être effectif sur une grande longueur.

Par ailleurs, les poutres 2c et 2d comprennent des inserts 62 et 62' d'immobilisation des longerons 4 et 4' à l'intérieur du logement 61 et 61'. Ces inserts sont pourvus d'organes de blocage tels que des vis destinées à coopérer avec des moyens correspondants prévus dans les longerons 4 et 4'.

L'invention a été présentée avec un châssis et des longerons réalisés en matériau composite. Elle est cependant applicable avec des éléments de structure réalisés dans d'autres matériaux et notamment en acier.

L'invention a été représentée avec des longerons 4 et 4' à section carrée ou rectangulaire et de forme globalement rectiligne ; il est bien entendu qu'elle est applicable quelle que soit la géométrie des longerons et notamment avec des longerons en forme de boucle aplatie, les moyens de fixation des longerons à l'intérieur des logements correspondants étant alors adaptés.

## Revendications

1. Bogie pour véhicule ferroviaire (V), ledit bogie étan en appui sur des roues (3, 3') réparties sur au moins deux essieux (A-A', B-B'), au moins un longeron étant prévu pour relier lesdits essieux à un châssis (2), **caractérisé en ce que** ledit châssis (2) comporte au moins un logement (61, 61'), en forme de tube orienté dans le sens longitudinal du bogie et débouchant aux deux extrémites dudit châssis, pour la réception dudit longeron (4, 4').

2. Bogie selon la revendication 1, **caractérisé en ce que** ledit logement (61, 61') est pourvu de moyens (62, 62') d'immobilisation dudit longeron (4, 4') par rapport audit châssis (2).

3. Bogie selon la revendication 2, **caractérisé en ce que** lesdits moyens d'immobilisation sont formés de dispositifs boulonnés ou de mâchoires articulées revêtues d'élastomère et fixées dans ledit logement (61, 61').

4. Bogie selon l'une des revendications précédentes, **caractérisé en ce que** la section interne dudit logement (61, 61') est adaptée pour épouser la forme extérieure dudit longeron (4, 4').

5. Bogie selon l'une des revendications précédentes, **caractérisé en ce que** la portée dudit longeron (4, 4') dans ledit logement (61, 61') s'effectue grâce à des moyens d'articulation répartis sur la longueur dudit logement.

6. Bogie selon l'une des revendications précédentes, **caractérisé en ce que** ledit châssis (2) et ledit longeron (4, 4') sont réalisés en matériau composite.

7. Bogie selon l'une des revendications 1 à 5, **caractérisé en ce que** ledit châssis (2) et ledit longeron (4, 4') sont réalisés en acier.

8. Bogie selon l'une des revendications précédentes, **caractérisé en ce que** ledit châssis (2) comprend deux poutres creuses (2c, 2d) s'étendant selon une direction globalement parallèle à la direction d'avance normale (F) dudit véhicule (V), un logement (61, 61') de réception d'un longeron (4, 4') étant ménagé dans chaque poutre.

9. Bogie selon la revendication 8, **caractérisé en ce que** ledit châssis (2) est de forme globalement parallélépipédique et pourvu d'un évidement central (60) bordé par lesdites deux poutres creuses (2c, 2d) et par deux traverses (2a, 2b) pourvues de moyens (20, 30, 33) de fixation d'éléments fonctionnels (10-17) du bogie.

10. Bogie selon la revendication 9, **caractérisé en ce que** lesdites traverses (2a, 2b) sont réalisées en matériau composite et **en ce que** lesdits moyens de fixation comprennent au moins un support rigide allongé (20) immobilisé dans l'une desdites traverses, ledit support étant apte à recevoir, de façon amovible, en plusieurs emplacements répartis sur sa longueur, des moyens (30, 33) de fixation d'éléments fonctionnels (10-17) du bogie.

11. Procédé de fabrication d'un bogie pour véhicule ferroviaire, **caractérisé en ce qu'**il consiste à :
- réaliser un châssis (2) pourvu d'au moins un logement (61, 61') orienté dans le sens longitudinal du bogie, pour la réception d'un longeron (4, 4') de support dudit châssis en appui sur deux essieux (A-A', B-B') de roues (3, 3') ;
- choisir, parmi plusieurs longerons (4, 4') de géométries différentes, un longeron adapté à l'utilisation prévue dudit bogie ;
- insérer ledit longeron (4, 4') dans ledit logement (61, 61') et
- immobiliser ledit longeron à l'intérieur dudit logement.

## Claims

1. Bogie for rail vehicle (V), the said bogie being borne on wheels (3, 3') spread among at least two axles (A-A', B-B'), at least one side-frame being provided for linking the said axles to an underframe (2), **characterized in that** the said underframe (2) has at least one housing (61, 61'), of tubular form aligned in the longitudinal direction of the bogie and emerging at the two ends of the said underframe to take the said side-frame (4, 4').

2. Bogie according to Claim 1, **characterized in that** the said housing (61, 61') has means (62, 62') for fixing the said side-frame (4, 4') in relation to the said underframe (2).

3. Bogie according to Claim 2, **characterized in that** the said means for fixing are formed of bolted devices or articulated jaws covered with elastomer and fixed in the said housing (61, 61').

4. Bogie according to one of the preceding claims, **characterized in that** the inside section of the said housing (61, 61') is adapted to mate with the outside shape of the said side-frame (4, 4').

5. Bogie according to one of the preceding claims, **characterized in that** the said side-frame (4, 4') is borne in the said housing (61, 61') by means of articulations spread over the length of the said housing.

6. Bogie according to one of the preceding claims, **characterized in that** the said underframe (2) and the said side-frame (4, 4') are made of composite material.

7. Bogie according to one of Claims 1 to 5, **characterized in that** the said underframe (2) and the said side-frame (4, 4') are made of steel.

8. Bogie according to one of the preceding claims, **characterized in that** the said underframe (2) comprises two hollow beams (2c, 2d) extending in a direction overall parallel with the normal direction of travel (F) of the said vehicle (V), a housing (61, 61') for taking a side-frame (4, 4') being arranged in each beam.

9. Bogie according to Claim 8, **characterized in that** the said underframe (2) is of overall parallelepipedal shape and has a central open space (60), bordered by the said two hollow beams (2c, 2d) and by two cross members (2a, 2b) provided with means (20, 30, 33) for fixing functional elements (10-17) of the bogie.

10. Bogie according to Claim 9, **characterized in that** the said cross members (2a, 2b) are made of composite material and that the said means for fixing comprise at least one long rigid support (20) fixed in one of the said cross members, the said support being suitable for taking, in fixed fashion, in several places spread over its length, means (30, 33) for fixing functional elements (10-17) of the bogie.

11. Process for manufacturing a rail vehicle bogie, **characterised in that** it consists in:
- making an underframe (2) with at least one housing (61, 61'), aligned in the longitudinal direction of the bogie, for taking a side-frame (4, 4') for support of the said underframe resting on two axles (A-A', B-B') for wheels (3, 3');
- choosing, from several side-frames (4, 4') of different geometry, a side-frame adapted to the planned use of the said bogie;
- inserting the said side-frame (4, 4') into the said housing (61, 61') and
- fixing the said side-frame inside the said housing.

## Patentansprüche

1. Drehgestell eines Schienenfahrzeugs (V), wobei sich das Drehgestell auf Räder (3, 3') stützt, die auf mindestens zwei Achsen (A-A', B-B') verteilt sind, wobei mindestens ein Längsträger zur Verbindung der Achsen mit einem Untergestellt (2) vorgesehen ist,
**dadurch gekennzeichnet,**
**dass** das Untergestell (2) mindestens eine Aufnahme (61, 61') in Form eines Rohres aufweist, das in Längsrichtung des Drehgestells verläuft und an beiden Enden des Drehgestells einmündet zur Aufnahme des Längsträgers (4, 4').

2. Drehgestell nach Anspruch 1,
**dadurch gekennzeichnet,**
**dass** die Aufnahme (61, 61') mit Blockierungsmitteln (62, 62') des Längsträgers (4, 4') im Verhältnis zu dem Untergestell (2) ausgestattet ist.

3. Drehgestell nach Anspruch 2,
**dadurch gekennzeichnet,**
**dass** die Blockierungsmittel bolzenförmige Vorrichtungen oder angelenkte Backen sind, die mit einem Elastomer beschichtet sind und in der Aufnahme (61, 61') befestigt sind.

4. Drehgestell nach einem der vorhergehenden Ansprüche,
**dadurch gekennzeichnet,**
**dass** der interne Querschnitt der Aufnahme (61, 61') dazu geeignet ist, die äußere Form des Längsträgers (4, 4') anzunehmen.

5. Drehgestell nach einem der vorhergehenden Ansprüche,
**dadurch gekennzeichnet,**
**dass** sich die Tragfähigkeit des Längsträgers (4, 4') innerhalb der Aufnahme (61, 61') durch Gelenkmittel ergibt, die über die Länge der Aufnahme verteilt sind.

6. Drehgestell nach einem der vorhergehenden Ansprüche,
**dadurch gekennzeichnet,**
**dass** das Untergestell (2) und der Längsträger (4, 4') aus Verbundmaterial gefertigt sind.

7. Drehgestell nach einem der Ansprüche 1 - 5,
**dadurch gekennzeichnet,**
**dass** das Untergestell (2) und der Längsträger (4, 4') aus Stahl hergestellt sind.

8. Drehgestell nach einem der vorhergehenden Ansprüche,
**dadurch gekennzeichnet,**
**dass** das Untergestell (2) zwei Hohlbalken (2c, 2d) umfasst, die sich in im wesentlichen paralleler Richtung zur normalen Fahrtrichtung (F) des Fahrzeugs (V) erstrecken, wobei eine Aufnahme (61, 61') zum Aufnehmen eines Längsträgers (4, 4') in jedem Balken angeordnet ist.

9. Drehgestell nach Anspruch 8,
**dadurch gekennzeichnet,**
**dass** das Untergestell (2) im wesentlichen eine Form eines Parallelepipeds aufweist und mit einer zentralen Ausnehmung (60) ausgestattet ist, die durch die beiden Hohlbalken (2c, 2d) und durch die beiden Querträger (2a, 2b), die Befestigungsmittel (20, 30, 33) der funktionellen Elemente (10 - 17) des Drehgestells aufweisen, begrenzt ist.

10. Drehgestell nach Anspruch 9,
**dadurch gekennzeichnet,**
**dass** die Querträger (2a, 2b) aus Verbundmaterial hergestellt sind und die Befestigungsmittel mindestens eine starre, verlängerte in einem der Querträger verriegelte Stütze (20) aufweisen, wobei die Stütze an mehreren über ihre Länge verteilten Stellen in der Lage ist, lösbare Feststellungsmittel (30, 33) der funktionellen Elemente (10 - 17) des Drehgestells aufzunehmen.

11. Verfahren zur Herstellung eines Drehgestells eines Schienenfahrzeugs,
**gekennzeichnet, durch:**
- Herstellen eines Untergestells (2), das mit mindestens einer Aufnahme (61,61') ausgestattet ist, die sich in der Längsrichtung des Drehgestells erstreckt, zum Aufnehmen eines stützenden Längsträgers (4, 4') des auf zwei Achsen (A-A', B-B') der Räder (3,3') gestützten Untergestells;
- Auswahl eines für die vorgesehene Verwendung des Drehgestells angepassten Längsträgers, aus mehreren Längsträgern (4,4') verschiedener Geometrien;
- Einführen des Längsträgers (4,4') in die Aufnahme (61, 61') und
- Blockieren des Längsträgers im Inneren der Aufnahme.
